# EUROPEAN PATENT APPLICATION

(11) **EP 3 249 100 A1**
(43) Date of publication of application: **29.11.2017**
(21) Application number: 15849823.8
(22) Date of filing: 19.06.2015
(51) Int. Cl.: E01C 5/00, E01C 11/22

(54) **BLOCK FOR ROADS HAVING IMPROVED ABILITY FOR RAINWATER TO CONTINUOUSLY PERMEATE THROUGH IMPROVED EFFICIENCY FOR DISCHARGING GRANULAR MATERIAL AND POWDERED MATERIAL IMPURITIES, ROAD PAVING STRUCTURE USING SAME, AND METHOD OF CONSTRUCTING SAID STRUCTURE**

(30) Priority: 20.01.2015 KR 20150009212
(71) Applicant: Eco-Top Co. Ltd., Jincheon-gun, Chungcheongbuk-do 365-861 (KR)
(72) Inventor: CHOI, Kyoung Young, Gyeonggi-do 13521 (KR)
(74) Representative: dompatent von Kreisler Selting Werner - Partnerschaft von Patent- und Rechtsanwälten mbB
(86) International application number: PCT/KR2015/006257
(87) International publication number: WO 2016/117778

(57) **Abstract**

The present invention relates to a road block with improved rainwater permeable sustainability through an improvement in discharge efficiency of the contaminants including particulate material and powdery material, a structure of road pavement and its construction methods using the same. The present invention includes a downward wide inclined surface (14) formed on a surface opposite to a flat plate-like rear surface portion (18) to be inclined inward in a direction from a top to a bottom; and engagement fastening portions (11, 12) consisting of a semicircular projection curved surface projected outward, and a semicircular depression curved surface that is connected to the semicircular projection curved surface and is formed to be depressed inside while extending to an end surface of the semicircular projection curved surface on both side surfaces.

## Description

### CROSS-REFERENCE TO RELATED APPLICATION

This application claims under 35 U.S.C. §119(a) the benefit of Korean Patent Application No. 10-2015-0009212, filed January 20, 2015, the entire contents of which are incorporated herein by reference.

| | |
|---|---|
| Project No. : | 416-111-017 |
| Ministry Name: | Ministry of Environment |
| Research and Management Organization: | Korea Environmental Industry & Technology Institute (KEITI) |
| Research Program Name: | Technology Development of the next generation eco-innovation |
| Research Project Name: | Development of Urban Ecosystem adaptation management Technology of Water resources department |
| Contribution Ratio: | 1/1 |
| Lead Agency: | Eco-Top Co., Ltd. |
| Research Period: | 2014.05.01 ∼ 2017.03.31 |

### BACKGROUND

### (a) Technical Field

The present disclosure relates to a road block with improved rainwater permeable sustainability through improved discharge efficiency of contaminants including particulate material and powdery material, a structure of a pavement and its construction method using the same. More particularly, it relates to a road block with improved rainwater permeable sustainability through improved discharge efficiency of particulate material and powdery material, a structure of a pavement and its construction method using the same, for allowing outflow water, the particulate material, and the powdery material of roads and a large area around the roads to pass through a bottom of a pavement layer, using a high-performance road block having a conventional permeable function and excellent in discharge of dust and waste of a certain standard to the bottom of the pavement layer, for transmitting and diffusing the rainwater, the particulate material and the powdery material passed from the pavement layer to ground and underground, or for allowing them to be treated by another water storage gap.

### (b) Background Art

Before urbanization proceeds, 40% of the rainwater is permeable into the ground, 50% is evaporated, and only about 10% of the rainwater flows out and flows into the sea through sewer pipes and rivers. However, while the urbanization proceeds, a quantity of permeable water is 20% and a quantity of evaporation decreases, and meanwhile, 50% or more of rainwater is concentrated in the sewer pipes. Thus, lowlands have been flooded, the water level of groundwater has been continuously lowered, and the cities have suffered from a heat island phenomenon, and a tropical night phenomenon. Thus, although developments of permeable blocks capable of continuously transmitting the rainwater to underground have been required, since the gap is easily blocked by contaminants including the particulate material and the powdery material in the conventional permeable block, the initial permeability is rapidly lost, and the block becomes impermeable.

Since the conventional general permeable block is made of a porous gap, the gap is closed within a period from six months to one year by contaminants including the particulate material and the powdery material, and the permeability is lost.

Thus, combined gap permeable blocks having a concept different from the conventional porous blocks have been developed. Among them, the conventional combined gap permeable blocks have been configured so that a noise absorption sponge is inserted into a drainage hole to absorb noise of the road and to absorb the water flowing from the road surface. However, since the drainage hole is in a state in which the bottom is blocked, discharge of water to the bottom is not structurally smooth. Furthermore, since the sponge inserted into the drainage hole has weak absorptive power of water, it has not been possible to continuously perform the function of evaporating water after absorption. Also, although a shock absorber such as asphalt, urethane, polypropylene and emulsion has been applied to an S-shaped connection portion, in the case of an application type, due to very thin thickness of a shock absorbent layer, a damage caused by impact during coupling has frequently occurred. Furthermore, since another function has not been added to the S-shaped connection portion of the combined gap permeable block, there has been a structural problem in which passage of water between the coupling sites has not been smooth, when performing a tight coupling between the S-shaped connection portion of the combined gap permeable block and an inverted S-shaped connection portion of anther combined gap permeable block.

In order to solve such a problem, the applicant has allowed the outflow water of the roads and the wide area around the roads to be transmitted to the bottom of the pavement surface, by the use of a high-performance permeable pavement surface layer block having an excellent permeable function by a block for road pavement, a structure of road pavement and its construction method using the same of Korean registered patent No. 10-1227275, and has allowed the rainwater transmitted from the upper pavement surface to be penetrated and diffused to the ground and the underground or to be sent to a separate water storage space by laminating deep blocks on the bottom of the pavement surface.

However, since a gap of the coupling surface between the blocks has consisted of a uniform width regardless of a height in the conventional combined gap permeable blocks, there has been no problem in the case of contaminants including small amounts of the particulate material and the powdery material. However, it has been found that there has been a problem in which the permeability has been considerably lowered according to the elapsed time when dropping a certain amount or more of the contaminants.

That is, although the permeable function has been enhanced in the case of Korean Registered Patent No. 10-1227275, since treatment of the particulate material and the powdery material is insufficient, there is a need for technical development for securing sustainability of the permeability, by allowing dust, waste, and other powders and pellets lower than certain standards to be penetrated and diffused to the ground and the underground together with water, or to be sent to a separate water storage space.

### [Related Technical Literature]

1. Block for road pavement, a structure of road pavement and its construction method using the same (Korean Patent Application No. 10-2012-0106911)
2. ENVIRONMENTAL CONSTRUCTING SYSTEM OF BREAST WALL AND THE METHOD THEREOF (Korean Patent Application No. 10-2012-0126403)

The above information disclosed in this Background section is only for enhancement of understanding of the background of the invention and therefore it may contain information that does not form the prior art that is already known in this country to a person of ordinary skill in the art.

### SUMMARY OF THE DISCLOSURE

The present invention has been made in an effort to solve the above-described problems associated with prior art, and an object thereof is to provide a road block for securing sustainability of the permeability, by improving a discharge efficiency of the outflow water of roads and wide areas around the roads and the contaminants including the particulate material and the powdery material, by the use of a high-performance road block that has the conventional permeable function, and is excellent in discharge of dust and waste of certain standards to the bottom of the pavement layer, a structure of road pavement and its construction method using the same.

However, an object of the present invention is not limited to the above- described object, and other objects not mentioned will be clearly understood by those skilled in the art from the following description.

In one aspect, the present invention provides a road block with improved rainwater permeable sustainability through an improvement in discharge efficiency of contaminants including particulate material and powdery material, wherein the road block is equipped with a downward wide inclined surface 14 formed on a surface opposite to a flat plate-like rear surface portion 18 to be inclined inward in a direction from the top to the bottom; and engagement fastening portions 11, 12 consisting of a semicircular projection curved surface projected outward, and a semicircular depression curved surface that is connected to the semicircular projection curved surface and is formed to be depressed inside while extending to an end surface of the semicircular projection curved surface on both side surfaces.

At this time, the downward wide inclined surface 14 is formed so that a tip of an inverted triangle form of the formed surface is cut, and a distance from a flat plate-like rear surface portion of another road block with improved rainwater permeable sustainability through an improvement in discharge efficiency of contaminants including particulate material and powdery material arranged on a front surface becomes far away as it goes from a top surface to a bottom.

In addition, in a preferred embodiment, the present invention further includes an attachment surface 16 that is formed so as to touch the flat plate-like rear surface portion of another road block with improved rainwater permeable sustainability through an improvement in discharge efficiency of contaminants including particulate material and powdery material in a region except a region of the front surface in which the downward wide inclined surface 14 is formed.

In addition, in another preferred embodiment, the present invention preferably further includes: a right discharge surface 15a that is a surface for connecting a right attachment surface 16a and the downward wide inclined surface 14 and has a structure in which an area formed on an inner side around the front surface of the road block 10 with improved rainwater permeable sustainability through an improvement in discharge efficiency of the contaminants including particulate material and powdery material becomes wider as it goes from the top surface to the bottom; and a left discharge surface 15b that is a surface for connecting a left attachment surface 16b and the downward wide inclined surface 14 and has a structure in which an area formed on an inner side around the front surface of the road block 10 with improved rainwater permeable sustainability through an improvement in discharge efficiency of the contaminants including particulate material and powdery material becomes wider as it goes from the top surface to the bottom.

In still another preferred embodiment, the present invention further includes a central discharge surface 15c which is formed by a flat plate-like surface for connecting a central attachment surface 16c and the downward wide inclined surface 14.

In yet another preferred embodiment, the present invention further includes a right drainage groove forming portion 17a that serves to collect water and the contaminants including particulate material and powdery material induced along the right discharge surface 15a, the downward wide inclined surface 14 and the central discharge surface 15c; and a left drainage groove forming portion 17b that serves to collect water and the contaminants including particulate material and powdery material induced along the left discharge surface 15b, the downward wide inclined surface 14 and the central discharge surface 15c.

In order to achieve the above-described object, in another aspect, the present invention provides a construction method using a road block with improved rainwater permeable sustainability through an improvement in discharge efficiency of contaminants including particulate material and powdery material, the method comprising: a first step of paving rubble to have a storage space of rainwater; a second step of hardening a rubble layer by a roller; a third step of maintaining a gap between the rubbles by installing a water-permeable sheet on the rubble layer; a fourth step of paying the sand on the top of the water-permeable sheet to maintain horizontality; and a fifth step of forming a surface layer block assembly by the road block 10 with improved rainwater permeable sustainability through an improvement in discharge efficiency of contaminants including particulate material and powdery material, wherein the method includes a first fastening step of forming a semicircular projection curved surface and a semicircular depression curved surface so as to be engaged with each other so that engagement fastening portions of another road block 10 with improved rainwater permeable sustainability through an improvement in discharge efficiency of contaminants including particulate material and powdery material are engaged with the engagement fastening portions of the road block 10 for discharging the particulate material and the powdery material, when forming an unequal settlement-prevention block assembly and a surface layer block assembly using the road block 10 with improved rainwater permeable sustainability through an improvement in discharge efficiency of contaminants including particulate material and powdery material at the fifth step; and a second fastening step of causing a flat plate-like rear surface portion 18 of another road block 10 for discharging the particulate material and the powdery material to touch an attachment surface 16 formed on a front surface of a road block 10 for discharging the particulate material and the powdery material to form a space between the attachment surface 16 and the flat plate-like rear surface portion 18 by a downward wide inclined surface 14 that is formed so as to be inclined inward from the top to the bottom inside a projected region formed by the attachment surface 16.

In order to achieve the above-described object, in still another aspect, the present invention provides structure of road pavement using a road block with improved rainwater permeable sustainability through an improvement in discharge efficiency of contaminants including particulate material and powdery material, wherein a finish and key block 19 is used as a block for constructing finishing start and end of the road block 10 with improved rainwater permeable sustainability through an improvement in discharge efficiency of contaminants including particulate material and powdery material, boundary stone is installed on both left and rights during construction of the block, since a gap is spaced from the boundary stone by the left semicircular projection curved surface 11a and the right semicircular projection curved surface 12a, the construction can be performed without a gap with a boundary stone through the finish and key block 19 having no left semicircular projection curved surface 11a and right semicircular projection curved surface 12a.

The road block with improved rainwater permeable sustainability through an improvement in discharge efficiency of contaminants including particulate material and powdery material, the structure of road pavement using the same, and its construction method provide an effect o allowing the outflow water, and contaminants including particulate material and powdery material of the roads and the wide area around the roads to pass to the bottom of the pavement layer using a high-performance road block having a permeable function and excellent in discharge of the dust and waste of a certain standard to the bottom of the pavement layer the bottom, and allowing the rainwater, the particulate material and the powdery material to be penetrated and diffused to the ground and the underground or to be treated to a separate water storage space.

### BRIEF DESCRIPTION OF THE DRAWINGS

The above and other features of the present invention will now be described in detail with reference to certain exemplary embodiments thereof illustrated the accompanying drawings which are given hereinbelow by way of illustration only, and thus are not limitative of the present invention.

FIG. 1 is a perspective view of a road block with improved rainwater permeable sustainability through an improvement in discharge efficiency of contaminants including particulate material and powdery material according to an embodiment of the present invention;
FIGS. 2(a) and 2(b) are a front view and a rear view of the road block with improved rainwater permeable sustainability through an improvement in discharge efficiency of contaminants including particulate material and powdery material of FIG. 1;
FIG. 3 is a plan view of the road block with improved rainwater permeable sustainability through an improvement in discharge efficiency of contaminants including particulate material and powdery material of FIG. 1;
FIG. 4 is a front view illustrating a concept of improving rainwater permeable sustainability through the improvement in the discharge efficiency of the contaminants including particulate material and powdery material, by the road block with improved rainwater permeable sustainability through the improvement in discharge efficiency of the contaminants including particulate material and powdery material of FIG. 1;
FIGS. 5 (a) and 5(b) are front views of a concept illustrating a concept of improving rainwater permeable sustainability through the improvement in the discharge efficiency of the contaminants including particulate material and powdery material, by the road block with improved rainwater permeable sustainability through the improvement in discharge efficiency of the contaminants including particulate material and powdery material according to another embodiment of the present invention;
FIG. 6 is a side view illustrating a concept of improving rainwater permeable sustainability through the improvement in the discharge efficiency of the contaminants including particulate material and powdery material, in regard to the road block with improved rainwater permeable sustainability through the improvement in discharge efficiency of the contaminants including particulate material and powdery material of FIG. 3;
FIG. 7 is a perspective view illustrating a state in which two road blocks with improved rainwater permeable sustainability through the improvement in discharge efficiency of the contaminants including particulate material and powdery material of FIG. 1 are connected to each other on a face side;
FIG. 8 is a perspective view illustrating a state in which three road blocks with improved rainwater permeable sustainability through the improvement in discharge efficiency of the contaminants including particulate material and powdery material of FIG. 1 are connected to one another on a front surface and a side surface;
FIG. 9 is a diagram for illustrating an effect of a test of a downward wide inclined surface according to the present invention; and
FIGS. 10 to 12 are diagrams for illustrating finish and key block of a road block with improved rainwater permeable sustainability through the improvement in the discharge efficiency of the contaminants including particulate material and powdery material.

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Hereinafter reference will now be made in detail to various embodiments of the present invention, examples of which are illustrated in the accompanying drawings and described below. While the invention will be described in conjunction with exemplary embodiments, it will be understood that present description is not intended to limit the invention to those exemplary embodiments. On the contrary, the invention is intended to cover not only the exemplary embodiments, but also various alternatives, modifications, equivalents and other embodiments, which may be included within the spirit and scope of the invention as defined by the appended claims.

Hereinafter, a detailed description of the preferred embodiment of the present invention will be described with reference to the accompanying drawings. In describing the present invention below, if a detailed description of associated known functions and configurations is determined to unnecessarily obscure the gist of the present invention, the detailed description thereof will be omitted.

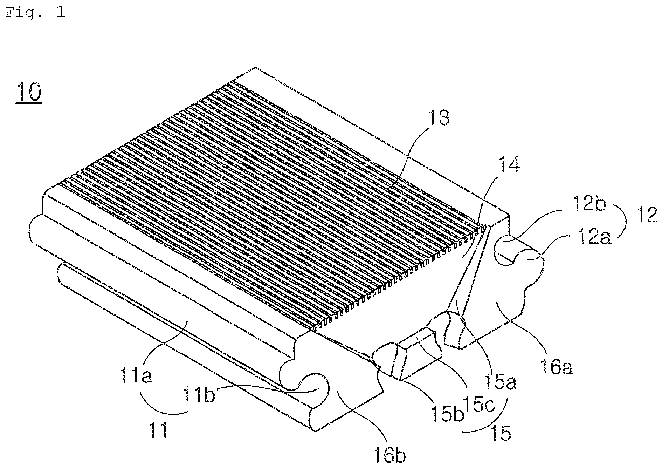

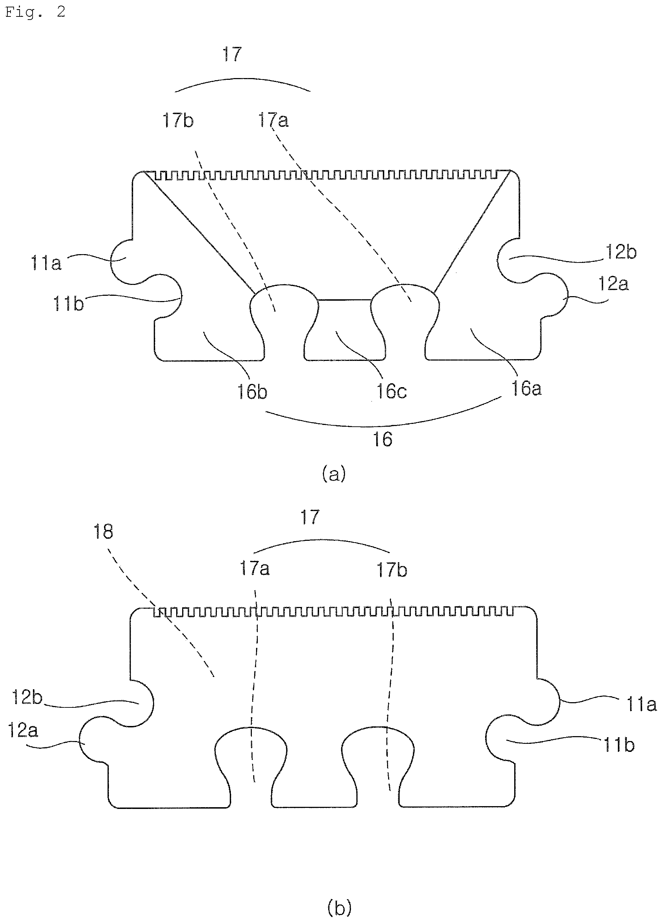

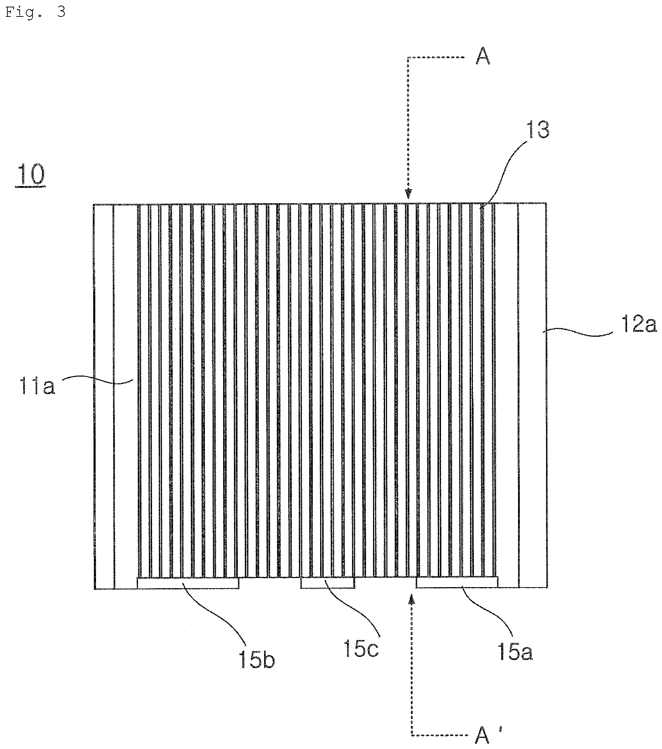

FIG. 1 is a perspective view of a road block 10 with improved rainwater permeable sustainability through an improvement in discharge efficiency of contaminants including particulate material and powdery material according to an embodiment of the present invention. FIG. 2 is a front view (FIG. 2a) and a rear view (FIG. 2b) of the road block 10a with improved rainwater permeable sustainability through an improvement in discharge efficiency of contaminants including particulate material and powdery material of FIG. 1. FIG. 3 is a plan view of the road block 10 with improved rainwater permeable sustainability through an improvement in discharge efficiency of contaminants including particulate material and powdery material of FIG. 1.

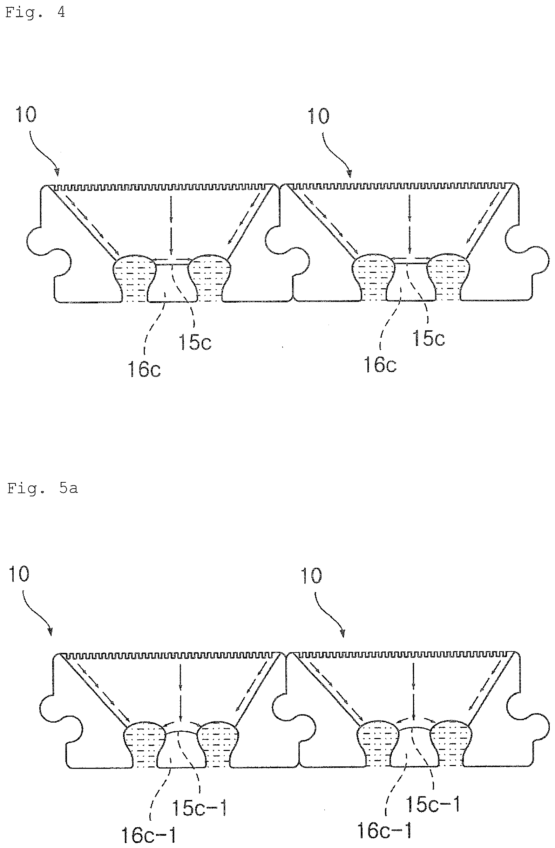

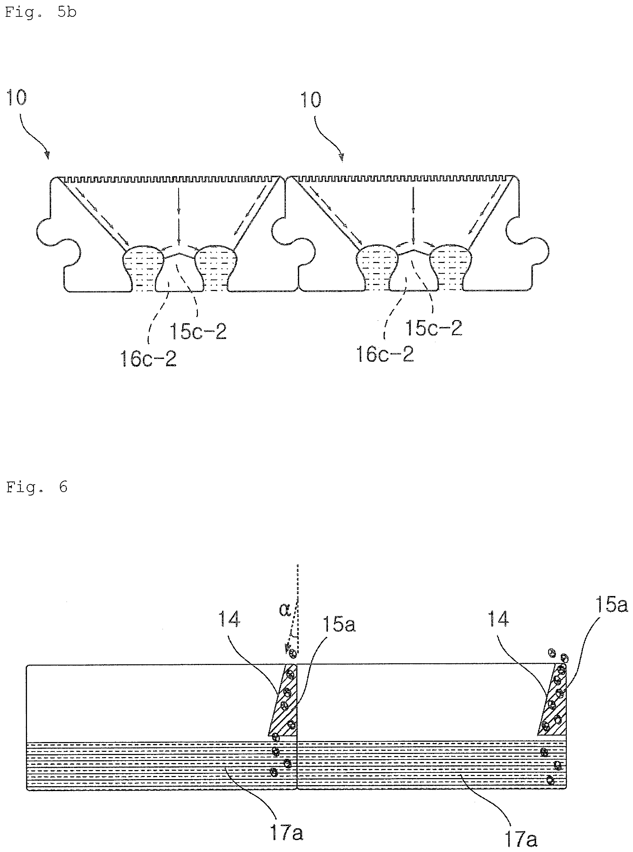

FIG. 4 is a front view illustrating a concept of improving rainwater permeable sustainability through the improvement in the discharge efficiency of the contaminants including particulate material and powdery material, by the road block 10 with improved rainwater permeable sustainability through the improvement in discharge efficiency of the contaminants including particulate material and powdery material of FIG. 1. FIGS. 5(a) and 5(b) are front views of a concept illustrating a concept of improving rainwater permeable sustainability through the improvement in the discharge efficiency of the contaminants including particulate material and powdery material, by the road block 10 with improved rainwater permeable sustainability through the improvement in discharge efficiency of the contaminants including particulate material and powdery material according to another embodiment of the present invention. Further, FIG. 6 is a side view illustrating a concept of improving the rainwater permeable sustainability through the improvement in the discharge efficiency of the contaminants including particulate material and powdery material, in a cross section based on A-A' in the road block with improved rainwater permeable sustainability through the improvement in the discharge efficiency of the contaminants including particulate material and powdery material of FIG. 3.

Referring to FIGS. 1 to 6, a road block 10 with improved rainwater permeable sustainability through an improvement in the discharge efficiency of the contaminants including particulate material and powdery material includes a left engagement fastening portion 11, a right engagement fastening portion 12, a non-slip groove 13, a downward wide inclined surface 14, a discharge surface 15, the attachment surface 16, a drainage groove forming portion 17, and a flat plate-like rear surface portion 18.

The left engagement fastening portion 11 includes a left semicircular projection curved surface 11a left semicircular depression curved surface 11b, and is formed on the left of the body.

More specifically, the left engagement fastening portion 11 is formed by an "S"-like curved surface on the left of the road block 10 with improved rainwater permeable sustainability through the improvement in the discharge efficiency of the contaminants including particulate material and powdery material. The left engagement fastening portion 11 has a left semicircular projection curved surface 11a that projects outward from the left surface at a first separation interval from the top of the left surface, and a left semicircular depression curved surface 11b formed to be depressed inward to the left surface of the road block 10 with improved rainwater permeable sustainability through the improvement in the discharge efficiency of the contaminants including particulate material and powdery material so as to be located below the left semicircular projection curved surface 11a while extending to the tip surface of the left semicircular projection curved surface 11a. The lower tip surface of the left semicircular projection curved surface 11a is formed at a second separation interval from the lower bottom of the road block 10 with improved rainwater permeable sustainability through the improvement in the discharge efficiency of the contaminants including particulate material and powdery material. Here, since the first separation interval is formed to be longer than the second separation interval, there is provided an advantage that provides stronger fastening force to the lower surface of the road block 10 with improved rainwater permeable sustainability through the improvement in the discharge efficiency of the contaminants including particulate material and powdery material, rather than the upper surface thereof, so that the fastening force is maintained for a long time even when the upper surface is partially damaged.

The right engagement fastening portion 12 includes a right semicircular projection curved surface 12a and a right semicircle depression curved surface 12b.

More specifically, the right engagement fastening portion 12 is formed by an "S"-like curved surface on the right surface of the road block 10 with improved rainwater permeable sustainability through the improvement in the discharge efficiency of the contaminants including particulate material and powdery material. The right engagement fastening portion 12 has a right semicircular depression curved surface 12b that is formed to be depressed inward from the right surface at a first separation interval from the top of the right surface, and a right semicircular projection curved surface 12a projected outward from the road block 10 with improved rainwater permeable sustainability through the improvement in the discharge efficiency of the contaminants including particulate material and powdery material so as to be located below the right semicircular depression curved surface 12b while extending to the tip surface of the right semicircular depression curved surface 12b. The lower tip surface of the right semicircular projection curved surface 12a is formed at a second separation interval from the lower bottom of the road block 10 with improved rainwater permeable sustainability through the improvement in the discharge efficiency of the contaminants including particulate material and powdery material. Here, since the first separation interval is formed to be longer than the second separation interval, there is provided an advantage that provides stronger fastening force to the lower surface of the road block 10 with improved rainwater permeable sustainability through the improvement in the discharge efficiency of the contaminants including particulate material and powdery material, rather than the upper surface thereof, so that the fastening force is maintained for a long time even when the upper surface is partially damaged.

The non-slip grooves 13 are formed in series at predetermined intervals on the upper surface of the road bock 10 with improved rainwater permeable sustainability through the improvement in the discharge efficiency of the contaminants including particulate material and powdery material.

The downward wide inclined surface 14 is formed from the top to the bottom on the front surface of the road block 10 with the improved rainwater permeable sustainability through the improvement in the discharge efficiency of the contaminants including particulate material and powdery material, by providing a slope to the inner side of the road block 10 with the improved rainwater permeable sustainability through the improvement in the discharge efficiency of the contaminants including particulate material and powdery material. Thus, the downward wide inclined surface 14 allows liquid such as rainwater as well as the particulate material and the powdery material on the upper surface of the road block 10 with the improved rainwater permeable sustainability through the improvement in the discharge efficiency of the contaminants including particulate material and powdery material to be smoothly discharged to a drainage groove forming portion 17 by a discharge surface 15 to be described below. That is, the downward wide inclined surface 14 is formed from the top to the bottom on the front surface of the road block 10 with the improved rainwater permeable sustainability through the improvement in the discharge efficiency of the contaminants including particulate material and powdery material as shown in FIG. 6, forms an inclined surface having a slope of α° from a vertical plane, and has a form in which a tip of an inverted triangle is cut when viewed from the front surface as a whole. Furthermore, the downward wide inclined surface 14 is formed so that a distance from a flat plate-like rear surface portion 18 of another road block 10 with the improved rainwater permeable sustainability through the improvement in the discharge efficiency of the contaminants including particulate material and powdery material formed on the front surface increases as it goes from the upper surface to the bottom as shown in FIG. 6.

The attachment surface 16 has a right attachment surface 16a, a central attachment surface 16b and a left attachment surface 16b. More specifically, the attachment surface 16 is formed except a region in which the downward wide inclined surface 14 is formed, in the front surface of the road block 10 with improved rainwater permeable sustainability through the improvement in the discharge efficiency of the contaminants including particulate material and powdery material. The right attachment surface 16a is formed in such a form that it projects from the right and lower surface around the lower right end of the downward wide inclined surface 14 on the front surface of the road block 10 with improved rainwater permeable sustainability through the improvement in the discharge efficiency of the contaminants including particulate material and powdery material.

More specifically, the right attachment surface 16a is formed in the form of a plane perpendicular to the upper surface, is formed in a space region between a left side on the basis of the right drainage groove forming portion 17a of the drainage groove forming portion 17 from the front surface of the road block 10 with improved rainwater permeable sustainability through the improvement in the discharge efficiency of the contaminants including particulate material and powdery material and the left side on the basis of the right outer peripheral surface formed by the right engagement fastening portion 12, and is formed to have a structure in which the front part touches the flat plate-like rear surface portion 18 corresponding to the back of another road block 10 with improved rainwater permeable sustainability through the improvement in the discharge efficiency of the contaminants including particulate material and powdery material.

The central attachment surface 16c is formed in such a form that it projects from the lower surface around the central lower end of the downward wide inclined surface 14 on the front surface of the road block 10 with improved rainwater permeable sustainability through improvement in the discharge efficiency of the contaminants including particulate material and powdery material.

More specifically, the central attachment surface 16c projects to be parallel to a space region between the left side of the right drainage groove forming portion 17a and the right side of the left drainage groove forming portion 17b of the drainage groove forming portion 17 of the road block 10 with improved rainwater permeable sustainability through the improvement in discharge efficiency of the contaminants including particulate material and powdery material, and a surface perpendicular to the lower space region of the downward wide inclined plane 14. Thus, the central attachment surface 16c is formed to have a structure which touches the flat plate-like rear surface portion 18 corresponding to the back of another road block 10 with improved rainwater permeable sustainability through the improvement in the discharge efficiency of the contaminants including particulate material and powdery material.

The left attachment surface 16c is formed in such a form that it projects from the left and lower surface around the lower left end of the downward wide inclined surface 14 on the front surface of the road block 10 with the improved rainwater permeable sustainability through the improvement in the discharge efficiency of the contaminants including particulate material and powdery material.

More specifically, the left attachment surface 16b is formed in the form of a plane perpendicular to the upper surface, is formed in a space region between a left side of the left drainage groove forming portion 17b of the drainage groove forming portion 17 from the front surface of the road block 10 with improved rainwater permeable sustainability through the improvement in the discharge efficiency of the contaminants including particulate material and powdery material and the right side on the basis of the left outer peripheral surface formed by the left engagement fastening portion 11, and is formed to have a structure in which the front part touches the flat plate-like rear surface portion 18 corresponding to the back of another road block 10 with improved rainwater permeable sustainability through the improvement in the discharge efficiency of the contaminants including particulate material and powdery material.

The discharge surface 15 consists of a right discharge surface 15a, a left discharge surface 15b, and a central discharge surface 15c.

The right discharge surface 15a is a surface for connecting the right attachment surface 16a and the downward wide inclined surface 14, and has a structure in which an area formed inside around the front surface of the road block 10 with improved rainwater permeable sustainability through the improvement in discharge efficiency of the contaminants including particulate material and powdery material becomes wider as it goes from the upper surface to the bottom.

The left discharge surface 15b is a surface for connecting the left attachment surface 16b and the downward wide inclined surface 14, and is formed to have a structure in which an area formed inside around the front surface of the road block 10 with improved rainwater permeable sustainability through the improvement in discharge efficiency of the contaminants including particulate material and powdery material becomes wider as it goes from the upper surface to the bottom.

The central discharge surface 15c is formed by a flat plate-like surface that connects the central attachment surface 16c and the downward wide inclined surface 14.

In addition, the discharge surface 15 can be formed inward at the front center of the road block 10 and on both front left and right sides and can be formed in a linear shape such as "\ _ /" or can be formed in a curved shape such as "\ ∩ /," \ ∧ / " in which the lower side is collected toward the right drainage groove forming portion 17a and the left drainage groove forming portion 17b so that water, the particulate material and the powdery material cab flow to the lower drainage groove forming portion 17. More specifically, as shown in FIG. 5a, only a central discharge surface 15c-1 may be formed by a curved surface or, as shown in FIG, 5b as another embodiment of the present invention, only a central discharge surface 15c-2 may be formed in a spire type. By forming the central discharge surface in the form of a curve or a spire, the contaminants including particulate material and powdery material introduced through the discharge surface 15 can be guided to the drainage groove forming portion 17 without being accumulated on the central discharge surfaces 15c-1 and 15c-2.

Both the right discharge surface 15a and the left discharge surface 15b can be formed by a curved surface.

The drainage groove forming portion 17 consists of the right drainage groove forming portion 17a and the left drainage groove forming portion 17b. Thus, the drainage groove forming portion 17 serves to collect water, the particulate material and the powdery material that are induced along the discharge surface 15 consisting of the right discharge surface 15a, the left discharge surface 15b and the central discharge surface 15c, as shown by the arrows in FIG. 4, 5 and 6.

More specifically, the right drainage groove forming portion 17a serves to collect water, the particulate material and the powdery material induced along the right discharge surface 15a, the downward wide inclined surface 14 and the central discharge surface 15c, and the left drainage groove forming portion 17b serves to collect water, the particulate material and the powdery material induced along the left discharge surface 15b, the downward wide inclined surface 14, and the central discharge surface 15c.

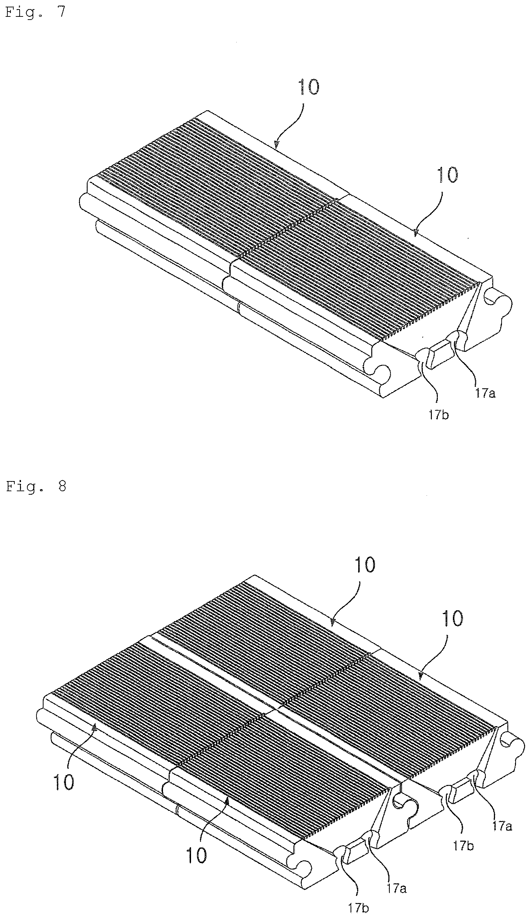

FIG. 7 is a perspective view illustrating a state in which the two road blocks 10 with improved rainwater permeable sustainability through the improvement in the discharge efficiency of the contaminants including particulate material and powdery material in FIG. 1 are connected on the front surface. FIG. 8 is a perspective view illustrating a state in which the three road blocks 10 with improved rainwater permeable sustainability through the improvement in the discharge efficiency of the contaminants including particulate material and powdery material in FIG. 1 are connected on the front surface and the side surface.

Next, a construction method using the road block 10 with improved rainwater permeable sustainability through the improvement in the discharge efficiency of the contaminants including particulate material and powdery material will be described.

In the construction method using the road block 10 with improved rainwater permeable sustainability through the improvement in the discharge efficiency of the contaminants including particulate material and powdery material, first, rubble is paved to have a storage capacity of rainwater.

Next, a rubble layer is hardened by a roller, a gap between the rubbles is maintained by installing a water-permeable sheet above the rubble layer. That is, the hardening is performed so that subsidence does not occur through the vibration hardening by the roller after paving the rubble layer for storing the rainwater.

Here, a water-permeable sheet is installed above the rubble layer so that the gap of the rubble layer is not filled with the upper sand and contaminants.

Thereafter, after maintaining horizontality by paving the sand above the water-permeable sheet, a surface layer block assembly is formed by a road block 10 with improved rainwater permeable sustainability through the improvement in discharge efficiency of the contaminants including particulate material and powdery material. More specifically, in order to ensure the flatness on the top of the water-permeable sheet, the sand layer is paved generally to have a thickness of 3cm. The sand layer is also intended to improve the flatness, but plays a role in decomposing and purifying the organic matters flowing from the drainage groove forming portion 17.

At this time, when forming the unequal settlement prevention block assembly and the layer block assembly using the road block 10 with improved rainwater permeable sustainability through the improvement in the discharge efficiency of the contaminants including particulate material and powdery material, a fastening process is performed in which the semicircular projection curved surface and the semicircular depression curved surface are engaged with each other so that the engagement fastening portion of another road block 10 with improved rainwater permeable sustainability through the improvement in the discharge efficiency of the contaminants including particulate material and powdery material is engaged with the engagement fastening portion of the road block 10 for discharging the particulate material and the powdery material.

Furthermore, as another fastening process, another fastening process is performed in which a space is formed between the attachment surface 16 and the flat plate-like rear surface portion 18 by the downward wide inclined surface 14 formed to be inclined from the top to the bottom inside the projection region by the attachment surface 16, by causing the flat plate-like rear surface portion 18 of another road block 10 for discharging the particulate material and the powdery material to touch the attachment surface 16 formed on the front surface of the road block 10 with improved rainwater permeable sustainability through the improvement in the discharge efficiency of the contaminants including particulate material and powdery material.

With such a structure, water serves to gradually penetrate the natural ground, and charge or evaporate the groundwater, thereby lowering the temperature of the pavement surface.

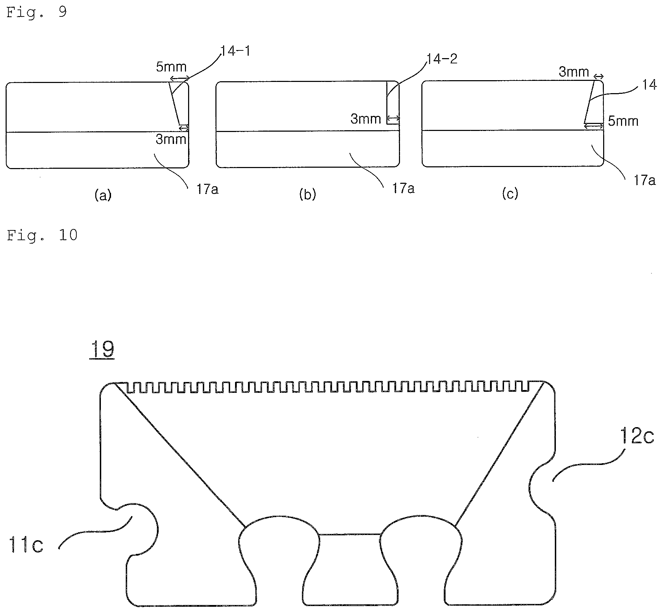

FIG. 9 is a diagram for illustrating an effect of a test of the downward wide inclined surface 14 according to the present invention, FIG. 9c illustrates the downward wide inclined surface 14 according to the present invention, FIG. 9a illustrates an upward wide inclined surface 14-1, and FIG. 9b illustrates a parallel type inclined surface 14-2. Meanwhile, since the experimental results shown in Table 1 below are displayed, after a certain amount of contaminants including particulate material and powdery material is inserted into one gap on the block and combed, the permeability test has been carried out. Here, the particulate material and the powdery material have used a particle size that has passed through a net of 5 mm.

As the permeability, the time at which water of 0.5L is transmitted to permeable testing machine has been measured.

**[Table 1]**

| Provision amount of contaminants | Upward wide type (FIG. 9) (sec) | Parallel type (FIG. 9b) (sec) | Downward wide type (FIG. 9c) (sec) |
|---|---|---|---|
| 10g | 8.2 | 6.1 | 6.1 |
| 20g | 12.3 | 6.3 | 6.1 |
| 30g | 20.2 | 6.8 | 6.1 |
| 50g | 50.1 | 7.5 | 6.1 |
| 100g | 80.3 | 10.2 | 6.1 |
| 150g | 120.1 | 18.3 | 6.1 |
| 200g | 180.2 | 25.2 | 6.1 |

In the case of the downward wide inclined surface 14 as shown in Table, an excellent effect of transmitting all rainwater for 6.1 seconds regardless of the provision amount of contaminants including particulate material and powdery material permeable has been proven.

FIGS. 10 to 12 are diagrams illustrating a finish and key block 19 of the road block 10 with improved rainwater permeable sustainability through the improvement in the discharge efficiency of the contaminants of powdery material and particulate material. That is, when constructing the finish and key block 19, the boundary stone is installed on both left and right sides. Since a gap is separated from the boundary stone by the left semicircular projection curved surface 11a and the right semicircular depression curved surface 12a, the construction is performed without a gap from the boundary stone through the finish and key block 19 having no left semicircular projection curved surface 11a and right semicircular depression curved surface 12a.

After completing the installation of the block, in some cases, a partial block of the pavement surface may be damaged. In this case, since both sides of the block are connected by S coupling, it is difficult to pull out the block from the top. Thus, by installing the finish and key block 9 by the key block during each construction, the finish and key block 19 can be easily pulled out. Accordingly, the damaged block may be replaced around the finish and key block 19. The finish and key block 19 has different colors or patterns so that it can be easily recognized when maintained.

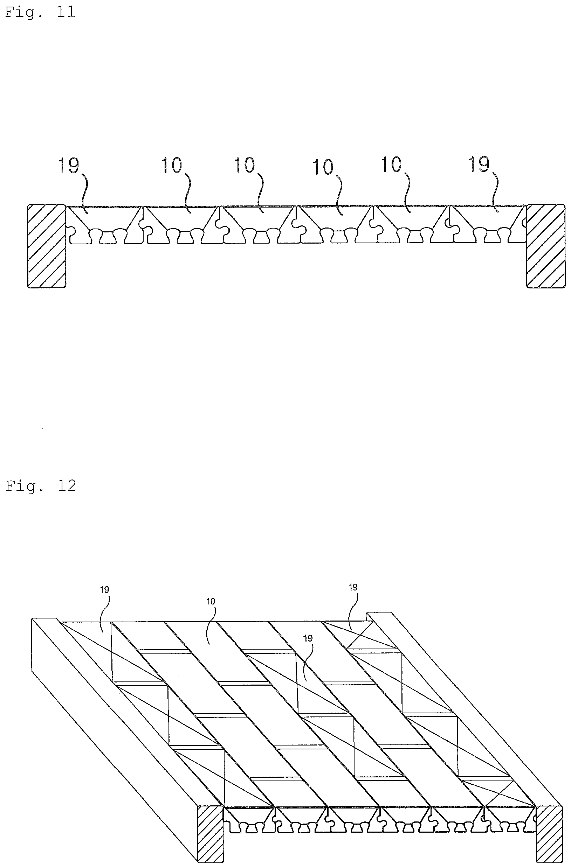

That is, as shown in FIG. 12, by disposing the finish and key block 19 separately displayed by symbol X on the surface layer at a suitable location, it is possible to easily separate the road block 10 with improved rainwater permeable sustainability through the improvement in the discharge efficiency of the contaminants including particulate material and powdery material.

As described above, although the preferred embodiments of the present invention have been disclosed in the specification and drawings and specific terms are employed, these have been used just in a general sense for briefly describing the technical details of the present invention and for a better understanding of the present invention, but are not intended to limit the scope of the present invention. It will be obvious to those skilled in the art that other variations based on the technical idea of the present invention can be practiced other than the embodiments disclosed herein.

The invention has been described in detail with reference to preferred embodiments thereof. However, it will be appreciated by those skilled in the art that changes may be made in these embodiments without departing from the principles and spirit of the invention, the scope of which is defined in the appended claims and their equivalents.

## Claims

1. A road block with improved rainwater permeable sustainability through an improvement in discharge efficiency of contaminants including particulate material and powdery material, the road block comprising:
a downward wide inclined surface (14) formed on a surface opposite to a flat plate-like rear surface portion (18) to be inclined inward in a direction from a top to a bottom; and
engagement fastening portions (11, 12) consisting of a semicircular projection curved surface projected outward, and a semicircular depression curved surface that is connected to the semicircular projection curved surface and is formed to be depressed inside while extending to an end surface of the semicircular projection curved surface on both side surfaces.

2. The road block with improved rainwater permeable sustainability through an improvement in discharge efficiency of contaminants including particulate material and powdery material of claim 1, wherein the downward wide inclined surface 14 is formed so that a tip of an inverted triangle form of the formed surface is cut, and
a distance from a flat plate-like rear surface portion of another road block with improved rainwater permeable sustainability through an improvement in discharge efficiency of contaminants including particulate material and powdery material arranged on a front surface becomes far away as it goes from a top surface to a bottom.

3. The road block with improved rainwater permeable sustainability through an improvement in discharge efficiency of contaminants including particulate material and powdery material of claim 1, further comprising:
an attachment surface (16) that is formed so as to touch the flat plate-like rear surface portion of another road block with improved rainwater permeable sustainability through an improvement in discharge efficiency of contaminants including particulate material and powdery material in a region except a region of the front surface in which the downward wide inclined surface (14) is formed.

4. The road block with improved rainwater permeable sustainability through an improvement in discharge efficiency of contaminants including particulate material and powdery material of claim 3, further comprising:
a right discharge surface (15a) that is a surface for connecting a right attachment surface (16a) and the downward wide inclined surface (14) and has a structure in which an area formed on an inner side around the front surface of the road block (10) with improved rainwater permeable sustainability through an improvement in discharge efficiency of the contaminants including particulate material and powdery material becomes wider as it goes from the top surface to the bottom; and
a left discharge surface (15b) that is a surface for connecting a left attachment surface (16b) and the downward wide inclined surface (14) and has a structure in which an area formed on an inner side around the front surface of the road block (10) with improved rainwater permeable sustainability through an improvement in discharge efficiency of the contaminants including particulate material and powdery material becomes wider as it goes from the top surface to the bottom.

5. The road block with improved rainwater permeable sustainability through an improvement in discharge efficiency of contaminants including particulate material and powdery material of claim 4, further comprising:
a central discharge surface (15c) which is formed by a flat plate-like surface for connecting a central attachment surface (16c) and the downward wide inclined surface (14).

6. The road block with improved rainwater permeable sustainability through an improvement in discharge efficiency of contaminants including particulate material and powdery material of claim 1, further comprising:
a right drainage groove forming portion (17a) that serves to collect water and the contaminants including particulate material and powdery material induced along the right discharge surface (15a), the downward wide inclined surface (14) and the central discharge surface (15c); and
a left drainage groove forming portion (17b) that serves to collect water and the contaminants including particulate material and powdery material induced along the left discharge surface (15b), the downward wide inclined surface (14) and the central discharge surface (15c).

7. A construction method using a road block with improved rainwater permeable sustainability through an improvement in discharge efficiency of contaminants including particulate material and powdery material, the method comprising: a first step of paving rubble to have a storage space of rainwater; a second step of hardening a rubble layer by a roller; a third step of maintaining a gap between the rubbles by installing a water-permeable sheet on the rubble layer; a fourth step of paying the sand on the top of the water-permeable sheet to maintain horizontality; and a fifth step of forming a surface layer block assembly by the road block (10) with improved rainwater permeable sustainability through an improvement in discharge efficiency of contaminants including particulate material and powdery material,
wherein the method includes:
a first fastening step of forming a semicircular projection curved surface and a semicircular depression curved surface so as to be engaged with each other so that engagement fastening portions of another road block (10) with improved rainwater permeable sustainability through an improvement in discharge efficiency of contaminants including particulate material and powdery material are engaged with the engagement fastening portions of the road block (10) for discharging the particulate material and the powdery material, when forming an unequal settlement-prevention block assembly and a surface layer block assembly using the road block (10) with improved rainwater permeable sustainability through an improvement in discharge efficiency of contaminants including particulate material and powdery material at the fifth step; and
a second fastening step of causing a flat plate-like rear surface portion (18) of another road block (10) for discharging the particulate material and the powdery material to touch an attachment surface (16) formed on a front surface of a road block (10) for discharging the particulate material and the powdery material to form a space between the attachment surface (16) and the flat plate-like rear surface portion (18) by a downward wide inclined surface (14) that is formed so as to be inclined inward from the top to the bottom inside a projected region formed by the attachment surface (16).

8. A structure of road pavement using a road block with improved rainwater permeable sustainability through an improvement in discharge efficiency of contaminants including particulate material and powdery material, wherein a finish and key block (19) is used as a block for constructing finishing start and end of the road block (10) with improved rainwater permeable sustainability through an improvement in discharge efficiency of contaminants including particulate material and powdery material, boundary stone is installed on both left and rights during construction of the block, since a gap is spaced from the boundary stone by the left semicircular projection curved surface (11a) and the right semicircular projection curved surface (12a), the construction can be performed without a gap with a boundary stone through the finish and key block (19) having no left semicircular projection curved surface (11a) and right semicircular projection curved surface (12a) .
